# FASCICULE DE BREVET EUROPEEN

(11) **EP 4 366 956 B1**
(45) Date de publication et mention de la délivrance du brevet: **24.12.2025**
(21) Numéro de dépôt: 22727378.6
(22) Date de dépôt: 10.05.2022
(51) Int. Cl.: B60B 31/00, B60B 1/00, B60B 1/02, B60B 31/02

(54) **DISPOSITIF D'APPROVISIONNEMENT EN RAYONS D'UN PISTOLET D'EJECTION DE RAYONS DANS DES ORIFICES D'UN MOYEU D'UNE ROUE A RAYONS**
VORRICHTUNG ZUM ZUFÜHREN VON SPEICHEN EINER SPEICHENAUSSTOSSPISTOLE IN LÖCHER IN EINER NABE EINES SPEICHENRADES
DEVICE FOR SUPPLYING SPOKES FROM A SPOKE-EJECTING GUN INTO HOLES IN A HUB OF A SPOKED WHEEL

(30) Priorité: 13.08.2021 FR 2108680
(43) Date de publication de la demande: 15.05.2024
(73) Titulaire: BIKEBOTIX, 74730 Villaz (FR)
(72) Inventeur: GAILLARD, Emmanuel, 74370 VILLAZ (FR); RODIER, Jean Louis, 74800 SAINT-PIERRE EN FAUCIGNY (FR)
(74) Mandataire: Ipsilon
(86) Numéro de dépôt international: PCT/FR2022/050891
(87) Numéro de publication internationale: WO 2023/017216

(56) Documents cités:
- EP-A1- 0 071 856
- EP-A1- 0 424 050
- WO-A1-99/12754
- US-A- 4 427 047

## Description

### Domaine technique

L'invention se rattache au secteur technique de la fabrication de roues à rayons destinées à équiper des véhicules de locomotion, tels que des vélos ou des motocyclettes par exemple.

Plus précisément, l'invention concerne un dispositif permettant d'approvisionner en rayons un pistolet d'une installation destinée à éjecter lesdits rayons à l'intérieur des orifices d'un moyeu d'une roue à rayons.

### Art antérieur

Les moyeux des roues à rayons comportent généralement une portion centrale cylindrique montée libre en rotation autour d'un axe, et bordée à ses deux extrémités par des flasques perpendiculaires, comportant chacun une couronne d'orifices destinés à recevoir des rayons pour relier le moyeu à la jante de la roue.

Il est notamment connu de l'art antérieur d'enfiler les rayons dans les orifices du moyeu par l'intermédiaire de dispositifs d'éjection, appelé pistolets, ou « Gun » en anglais pour réaliser cette opération de manière rapide et automatique.

Des pistolets, par exemple deux ou quatre, sont alors positionnés de part et d'autre du moyeu et insèrent automatiquement les rayons dans les orifices du moyeu.

Lesdits pistolets doivent alors être aussi approvisionnés automatiquement en rayons à éjecter.

Un dispositif d'approvisionnement en rayons connu de l'état de la technique comprend :
- une réserve de rayons dans laquelle sont destinés à être entreposés en faisceaux les rayons à approvisionner ;
- des moyens de prélèvement et de convoyage des rayons, un par un, depuis une entrée positionnée dans la réserve, et en direction d'une zone d'évacuation des rayons, en regard de laquelle le pistolet d'éjection est destiné à être positionné.

En pratique, le pistolet présente une fente supérieure dans laquelle les rayons sont destinés à être successivement chargés en vue de leur éjection. Ladite fente est alors positionnée à l'aplomb de la zone d'évacuation pour recevoir les rayons évacués par le dispositif d'approvisionnement.

Un tel dispositif d'approvisionnement est notamment décrit par le document WO99/12754.

Le problème qui se pose dans ce dispositif connu est que les moyens de prélèvement et de convoyage des rayons peuvent ne pas réussir à prélever un rayon, ou bien que des rayons prélevés soient mal positionnés, ou bien qu'au lieu de n'en prélever qu'un seul à la fois, plusieurs rayons sont prélevés et empilés de sorte que lorsque l'un des rayons chute, il entraîne celui déjà correctement positionné. Tous ces inconvénients font que le prélèvement des rayons n'est pas forcément constant et continu de sorte que les rayons manquants génèrent des attentes au niveau de l'approvisionnement en rayons du pistolet.

Les temps d'attente rallongent le temps de fabrication d'une roue à rayons, ce qui n'est pas souhaité.

Ces inconvénients sont également présents dans les documents EP0071856 et EP0424050 qui décrivent des dispositifs similaires.

Il est également connu le dispositif du document US4427047 qui décrit un dispositif selon le préambule de la revendication 1.

Cependant, dans ce document, la zone d'attente intermédiaire, référencée (35), évacue les rayons, un à un dans une seconde zone d'attente, puis dans un tube pour ensuite tomber dans la zone d'évacuation en regard de laquelle est positionné un dispositif d'éjection des rayons dans un moyeu. L'évacuation dans le dispositif d'éjection se fait verticalement.

Cette solution présente également des temps d'attente qui rallongent le temps de fabrication d'une roue à rayons, ce qui n'est pas souhaité.

Par ailleurs, , lors du guidage, et avant la sélection un à un des rayons afin de les évacuer successivement vers la zone d'évacuation, l'extrémité libre des rayons doit se stabiliser, ce qui entraine une augmentation de la durée de l'approvisionnement en rayon du pistolet.

Enfin, un tel dispositif ne permet que de fournir un seul côté des flasques du moyeu en rayon. Par conséquent, une fois les flasques à moitié chargé en rayons, il est nécessaire de retourner le moyeu car les rayons sont insérés en alternance depuis l'intérieur et l'extérieur des flasques. Cependant, il est peu aisé de réaliser l'insertion de rayon dans un moyeu déjà à moitié chargé de rayon.

### Exposé de l'invention

L'un des buts de l'invention et donc de fournir un dispositif d'approvisionnement en rayons d'un pistolet d'éjection de rayons dans des orifices d'un moyeu d'une roue à rayons, qui permet un approvisionnement constant afin d'éviter les temps d'attente lors de l'opération d'éjection des rayons par le pistolet.

Un autre objectif de l'invention est de bénéficier d'un cycle de fonctionnement de la machine plus long, en diminuant les interventions de réapprovisionnement en rayons du dispositif d'approvisionnement lui-même.

À cet effet, il a été mis au point un dispositif comprenant :
- une réserve de rayons dans laquelle sont destinés à être entreposés en faisceaux les rayons à approvisionner ;
- des moyens de prélèvement et de convoyage des rayons, un par un, depuis une entrée positionnée dans la réserve, et en direction d'une zone d'évacuation en regard de laquelle un pistolet d'éjection est destiné à être positionné.

Selon l'invention, le dispositif comprend une zone d'attente intermédiaire dans laquelle les rayons sont déposés un par un, située entre une sortie des moyens de prélèvement et de convoyage et la zone d'évacuation. La zone d'attente intermédiaire est équipée de moyens permettant de faire tomber un par un les rayons dans la zone d'évacuation pour approvisionner un pistolet.

De cette manière, la zone d'attente intermédiaire permet d'assurer la présence d'une quantité suffisante de rayons prêts à être évacués directement dans un pistolet, et ce afin d'éviter tout temps mort, et ce peu importe si les moyens de prélèvement et de convoyage échouent à prélever et/ou à convoyer un ou plusieurs rayons.

Par conséquent, le procédé de fabrication d'une roue à rayons est continu ce qui optimise la productivité.

La zone d'attente intermédiaire présente des dimensions adaptées pour recevoir un nombre de rayons permettant d'assurer la réalisation d'un moyeu entier en cas de défaillance des moyens de prélèvement et de convoyage. Le nombre de rayons nécessaires dépend du nombre d'orifices présents dans le moyeu, du nombre de dispositif d'approvisionnement utilisé, et du nombre pistolet utilisé pour enfiler les rayons. Par exemple, dans le cas d'une roue à 36 rayons, avec deux pistolets d'éjection, chacun alimenté par deux dispositifs d'approvisionnement, chaque zone d'attente intermédiaire doit présenter des dimensions adaptées pour recevoir au moins neuf rayons.

Les moyens permettant de faire tomber un par un les rayons dans la zone d'évacuation se présentent, de préférence, sous la forme d'une inclinaison de la zone d'attente intermédiaire en direction de la zone d'évacuation, pour forcer les rayons en attente à se diriger vers la zone d'évacuation par la force de la gravité, en combinaison avec des moyens d'isolement d'un rayon.

Ainsi, les rayons présents dans cette zone d'attente intermédiaire sont successivement isolés pour tomber, un par un, dans la zone d'évacuation afin d'approvisionner le pistolet.

Selon l'invention, la zone d'attente intermédiaire définit un plan pour recevoir les rayons positionnés côte à côte et à plat.

Ainsi, les rayons sont sensiblement horizontaux et supportés au moins en deux points, ce qui permet d'améliorer la stabilité de la position des rayons à éjecter.

Par conséquent, la cadence d'approvisionnement d'un pistolet d'éjection de rayon se retrouve améliorée, par une diminution du temps et des intermittences entre les étapes d'approvisionnement et d'éjection des rayons.

Par ailleurs, l'évacuation des rayons depuis la zone d'attente intermédiaire, directement dans une zone d'évacuation en regard de laquelle est positionné le pistolet permet d'approvisionner directement le pistolet en sortie de la zone d'attente intermédiaire. La cadence s'en trouve encore améliorée.

Un autre avantage de l'invention est que l'évacuation des rayons se fait à plat, c'est-à-dire selon une distance faible d'évacuation pour approvisionner le pistolet, corrélée à l'épaisseur du rayon, alors que dans certains dispositifs de l'art antérieur, l'évacuation se fait verticalement, c'est-à-dire selon la longueur du rayon. Le rayon doit donc parcourir une plus longue distance pour approvisionner le pistolet.

Dans cette configuration, les moyens d'isolement d'un rayon se présentent, de préférence, sous la forme de deux doigts traversant un plan défini par la zone d'attente intermédiaire, pour isoler un rayon entre les deux doigts. Les doigts sont escamotables indépendamment l'un de l'autre pour, d'une part, laisser pénétrer un rayon entre les deux doigts pour l'isoler et, d'autre part, laisser s'échapper le rayon isolé dans la zone d'évacuation.

Le dispositif selon l'invention permet également de s'adapter aux différentes tailles de rayons à enfiler. Pour ce faire, le dispositif comprend, de préférence, un guide réglable en largeur positionné de part et d'autre de la réserve et des moyens de prélèvement et de convoyage. La largeur du guide est réglée en fonction de la longueur des rayons à guider.

De préférence, le dispositif comprend des moyens de détection de la présence de rayons dans la zone d'attente intermédiaire et/ou à l'entrée et/ou à la sortie des moyens de prélèvement et de convoyage. Ces moyens de détection sont reliés à tous moyens appropriés pour émettre un signal et/ou pour engager une action en cas de présence ou de défaut de présence de rayons.

Afin de maximiser le temps de fonctionnement du dispositif selon l'invention, la réserve se présente sous la forme d'un plateau allongé dans une direction orthogonale aux rayons. Ainsi, les rayons peuvent être présentés en faisceaux, et étalés pour former une couche de rayons d'une quantité nettement plus importante que dans l'état de la technique où seul un fagot de rayons pouvait être positionné.

Le plateau de la réserve est approvisionné en rayons manuellement, ou avantageusement par une bande convoyeuse afin d'éviter les opérations d'approvisionnement manuelles.

Selon une forme de réalisation particulière, les moyens de prélèvement et de convoyage des rayons se présentent sous la forme d'une courroie crantée sur sa face externe, les rayons étant destinés à se positionner entre deux crans de la courroie.

Afin d'éviter l'engorgement de rayons au niveau de l'entrée des moyens de prélèvement et de convoyage, le dispositif comprend un poussoir, positionné au niveau de l'entrée des moyens de prélèvement et de convoyage pour pousser par le dessous les rayons.

### Brève description des dessins

[Fig. 1] est une vue en perspective du dispositif d'approvisionnement en rayons de la présente invention.
[Fig. 2] est une vue en perspective du dispositif selon l'invention, vu latéralement pour illustrer la réserve de rayons et le poussoir.
[Fig. 3] représente, de manière isolée, les moyens de prélèvement et de convoyage des rayons, ainsi que le poussoir.
[Fig. 4] illustre en perspective et en détail les moyens de prélèvement et de convoyage des rayons en direction de la zone d'attente intermédiaire.
[Fig. 5] illustre le sommet des moyens de prélèvement et de convoyage, ainsi qu'une vis de limitation de la hauteur de passage des rayons.
[Fig. 6] est une vue en perspective de la sortie des moyens de prélèvement et de convoyage, de la zone d'attente intermédiaire, et de moyens de limitation de la hauteur de passage des rayons dans ladite zone d'attente intermédiaire.
[Fig. 7] illustre en perspective, et de face, les zones d'attente intermédiaire et la zone d'évacuation vers le pistolet d'éjection.
[Fig. 8] est une vue de détail de la figure 7, dans laquelle les moyens de limitation de la hauteur de passage des rayons ont été masqués sur le dispositif de droite afin d'apercevoir les moyens d'isolement d'un rayon.
[Fig. 9] illustre, de manière isolée et en perspective, les moyens d'isolement d'un rayon.

### Description détaillée de l'invention

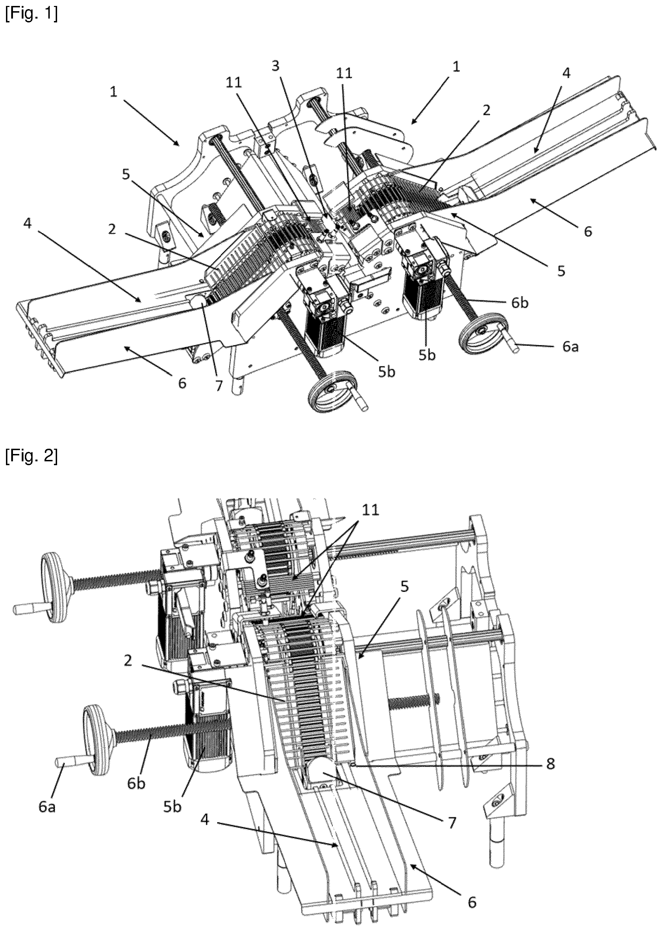

En référence figure 1 à 9, l'invention concerne un dispositif (1) permettant d'approvisionner en rayon (2) un pistolet destiné à éjecter lesdits rayons (2) dans les orifices d'un moyeu d'une roue à rayons (2).

En référence aux figures 1 et 2, et dans l'exemple illustré, ni le pistolet, ni le moyeu ne sont représentés, et deux dispositifs (1) d'approvisionnement sont assemblés pour approvisionner, à tour de rôle, un pistolet en rayons (2).

Les dispositifs (1) d'approvisionnement illustrés partagent donc tous les deux une même zone d'évacuation (3) des rayons (2), à l'aplomb de laquelle le pistolet d'éjection est destiné à être positionné pour l'approvisionnement en tant que tel.

Les deux dispositifs (1) d'approvisionnement peuvent chacun admettre une taille de rayon (2) différente puisqu'il existe des moyeux montés avec des rayons (2) de tailles différentes.

Les dispositifs (1) d'approvisionnement comprennent chacun une réserve (4) de rayons (2), se présentant par exemple sous la forme d'un plateau allongé sur lequel sont destinés à être entreposés en faisceau des rayons (2) à approvisionner.

Les rayons (2) sont notamment positionnés sensiblement parallèlement les uns aux autres dans la largeur du plateau, de sorte que le plateau s'étend et est allongé dans une direction perpendiculaire aux rayons (2). Les plateaux sont inclinés de sorte à diriger, par gravité, les rayons (2) vers des moyens de prélèvement et de convoyage (5) des rayons (2), depuis une entrée positionnée dans ladite réserve (4), et en direction de la zone d'évacuation (3).

Le dispositif (1) selon l'invention comprend également un guide (6), notamment réalisé par les parois latérales bornant la réserve (4) et les moyens de prélèvement et de convoyage (5), dont la largeur, c'est-à-dire l'espacement entre les parois latérales, est réglable pour s'adapter à la longueur des rayons (2) à approvisionner. Sur l'exemple illustré, la largeur des guides (6) est réglée par l'actionnement d'une manivelle (6a) associée à une vis sans fin (6b) assujettie au guide (6).

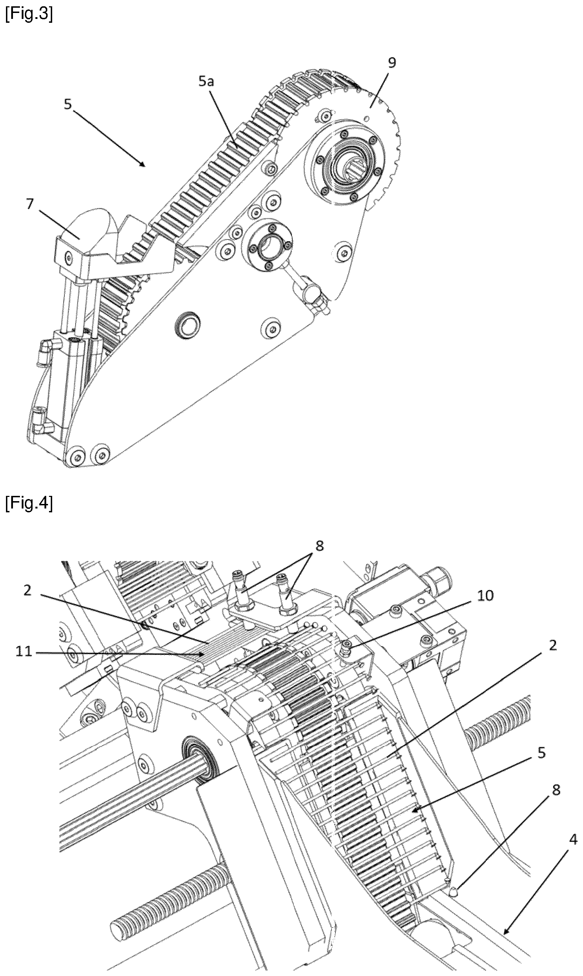

En référence à la figure 3, les moyens de prélèvement et de convoyage (5) de rayons (2) se présentent sous la forme d'une courroie (5a), entraînée en rotation entre deux roues, dont au moins l'une est motorisée, voir moteur (5b), et crantée au moins sur sa face externe, et de préférence sur ses deux faces, afin de pouvoir prélever et convoyer, un par un, les rayons (2) présents dans la réserve (4).

Les crans de la courroie (5a) sont espacés les uns des autres d'une largeur suffisante pour permettre de recevoir les rayons (2), un par un, transversalement à la courroie (5a). Les rayons (2) sont donc destinés à venir se positionner entre deux crans de la courroie (5a) pour être transportés en direction d'une zone d'évacuation (3).

Afin d'éviter l'engorgement de rayons (2) au niveau de l'entrée des moyens de prélèvement et de convoyage (5), le dispositif (1) comprend un poussoir (7) déplaçable, par exemple, par l'intermédiaire d'un vérin, et positionné pour pousser les rayons (2) par le dessous pour bousculer les rayons (2) et éviter l'engorgement de l'entrée.

De préférence, le poussoir (7) présente une extrémité biseautée, du côté de la réserve (4), pour faire reculer le faisceau de rayons (2) et ne laisser qu'une quantité moindre de rayons au niveau de l'entrée pour diminuer l'engorgement.

Le dispositif (1) comprend également des moyens de détection (8) de la présence de rayons (2) dans la réserve (4) et au niveau de l'entrée des moyens de prélèvement et de convoyage (5), par exemple sous la forme de capteurs inductifs. Le poussoir (7) peut être actionné en fonction du signal émis par ces moyens de détection (8).

Au niveau de la sortie des moyens de prélèvement et de convoyage (5), la courroie (5a) crantée est associée, de part et d'autre, à un trieur sous la forme de roues crantées (9) positionnées de part et d'autre de la courroie (5a), dont les creux sont positionnés en concordance avec les creux de la courroie (5a) crantée, et dont les creux présentent une dimension ajustée au diamètre des rayons (2) pour ne saisir qu'un seul rayon (2) à la fois.

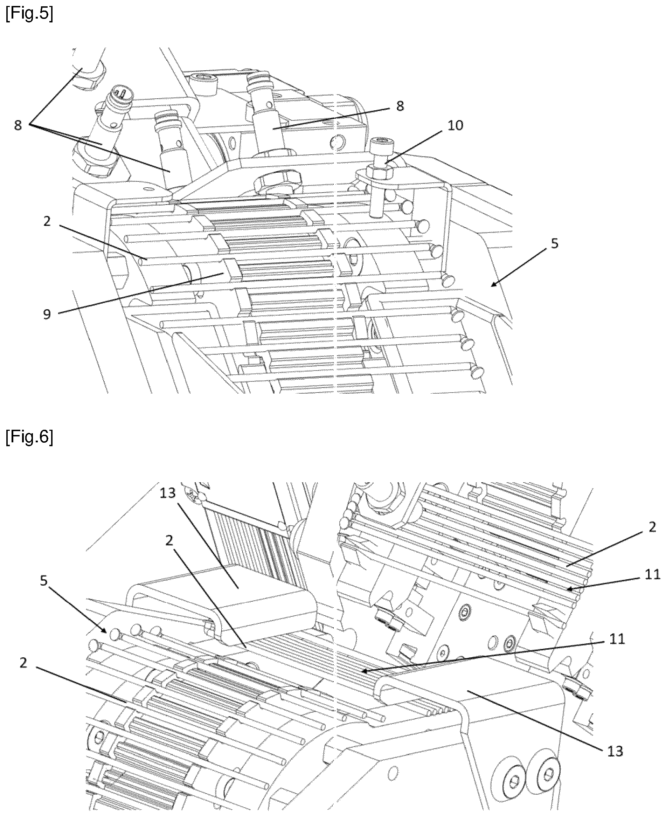

En référence aux figures 4 et 5, des moyens de limitation de la hauteur de passage, par exemple ici au moins une vis (10), et de préférence deux vis, sont positionnés au-dessus des rayons (2) et sont rapprochés de ceux-ci pour que, si un rayon (2) est convoyé en étant posé sur un autre, le rayon (2) en trop est poussé par les moyens de limitation de la hauteur pour qu'il chute et retourne dans la réserve (4).

Lors de cette opération, des rayons (2) positionnés correctement dans les moyens de prélèvement et de convoyage (5) peuvent chuter en même temps que le rayon (2) qui a été poussé, de sorte à nuire au convoyage continu espéré.

Pour pallier cette situation, ou même à la situation dans laquelle les moyens de prélèvement et de convoyage (5) ne réussiraient pas à prélever un rayon (2) dans la réserve (4), le dispositif (1) comprend, au niveau de la sortie des moyens de prélèvement et de convoyage (5), une zone d'attente intermédiaire (11) dans laquelle les rayons (2) sont déposés un par un.

La zone d'attente intermédiaire (11) est donc située entre la sortie des moyens de prélèvement et de convoyage (5) et la zone d'évacuation (3).

La zone d'attente intermédiaire (11) est également équipée de moyens (12) permettant de faire tomber un par un les rayons (2) dans la zone d'évacuation (3) pour approvisionner le pistolet.

Cette zone d'attente intermédiaire (11) fait office de zone tampon et assure d'avoir toujours une quantité suffisante de rayons (2) prêts à être évacués pour approvisionner le pistolet. Celle-ci permet de garantir un approvisionnement du pistolet constant, et évite tout temps mort. La productivité est donc optimale.

La zone d'attente intermédiaire (11) peut être de tout type approprié et est en principe dimensionné en volume ou en surface, pour recevoir un nombre de rayons (2) en attente suffisant pour pouvoir enfiler tous les rayons (2) d'un moyeu d'une roue.

Par exemple, dans le mode de réalisation illustré, la zone d'attente intermédiaire (11) définit un plan, de sorte que les rayons (2) sont positionnés un par un, côte à côte et à plat, et est adaptée pour recevoir neuf rayons (2), car pour enfiler les rayons (2) dans un moyeu, deux dispositifs (1) selon l'invention sont disposés de part et autre du moyeu, de sorte que deux pistolets sont approvisionnés par quatre dispositifs (1) d'approvisionnement. Un moyeu classique comprend 36 rayons, soit 4 × 9 rayons.

En référence aux figures 6, 7 et 8, le dispositif (1) comprend des moyens de détection (8) de la présence de rayons (2) au niveau de la sortie des moyens de prélèvement et de convoyage (5), ainsi qu'au niveau de la zone d'attente intermédiaire (11) pour signaler toute présence ou absence de rayons (2).

En référence à ces figures, des moyens pour limiter la hauteur de passage des rayons (2), tels que par exemple des tôles pliées (13), sont disposés au niveau de chaque zone d'attente intermédiaire (11) pour garantir que les rayons (2) sont positionnés à plat, en vue d'être évacués un par un.

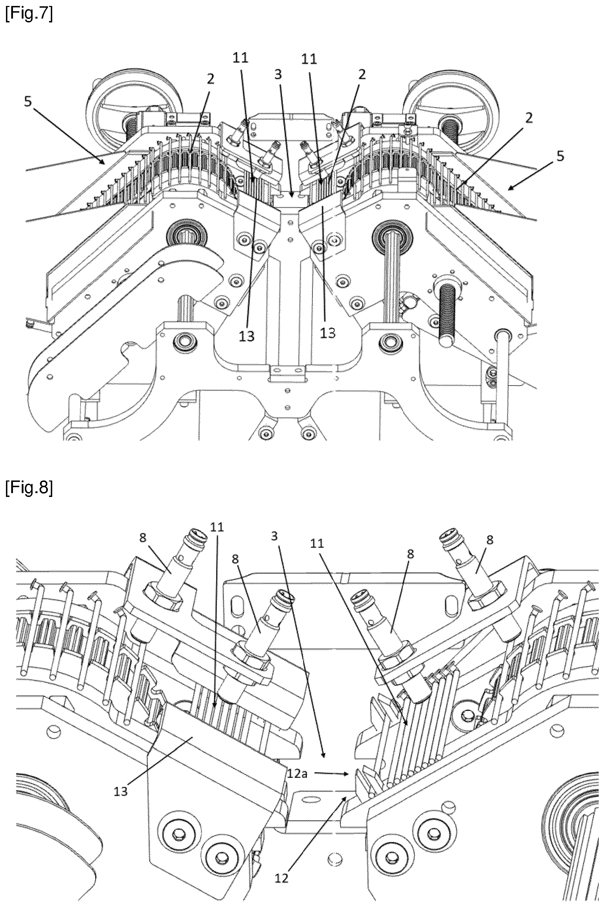

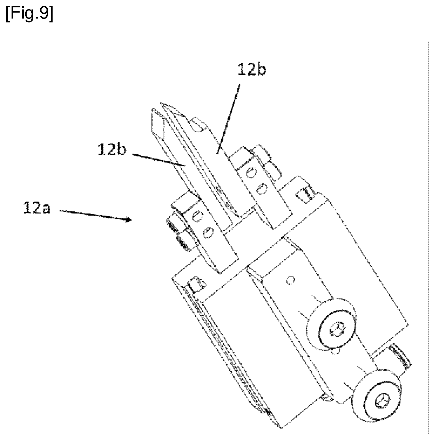

En référence aux figures 8 et 9, les moyens (12) permettant de faire tomber un par un les rayons (2) dans la zone d'évacuation (3) se présentent sous la forme d'une inclinaison de la zone d'attente intermédiaire (11) en direction de la zone d'évacuation (3), ainsi que de moyens d'isolement (12a) d'un rayon (2).

Les moyens d'isolement (12a) d'un rayon (2) sont de toute forme appropriée, et par exemple sous la forme de deux doigts (12b) positionnés pour traverser un plan défini par la zone d'attente intermédiaire (11) afin d'isoler un rayon (2) entre les deux doigts (12b). Les deux doigts (12b) sont notamment espacés l'un de l'autre d'une distance ajustée au diamètre des rayons (2).

Les deux doigts (12b) sont escamotables, indépendamment l'un de l'autre, pour, d'une part, laisser pénétrer un rayon (2) entre les deux doigts (12b) par la gravité du fait de l'inclinaison de la zone d'attente intermédiaire (11) et, d'autre part, pour laisser s'échapper le rayon (2) dans la zone d'évacuation (3), toujours par la force de gravité.

En pratique, lorsque l'un des doigts (12b) est en saillie, l'autre est escamoté et vice versa afin de ne pas créer de temps mort.

La figure 9 illustre en perspective les moyens d'isolement (12a) avec les deux doigts (12b), pilotés par exemple de manière pneumatique, électrique, ou de toute autre manière appropriée.

En référence à la figure 8, les moyens d'isolement (12a) sont par exemple au nombre de deux par zone d'attente intermédiaire (11), disposés de part et d'autre de ladite zone d'attente intermédiaire (11). Dans la forme de réalisation illustrée, les moyens d'isolement (12a) sont positionnés sous la zone d'attente intermédiaire (11) pour que les doigts (12b) fassent saillie en traversant la zone d'attente intermédiaire (11) par le dessous. Une configuration inverse peut tout à fait être envisagée, pour que les doigts (12b) traversent par le dessus la zone d'attente intermédiaire (11).

Les doigts (12b) présentent des extrémités supérieures biseautées, opposées l'une à l'autre et orientées vers l'extérieur pour, s'agissant du doigt positionné du côté de la zone d'évacuation (3), pousser si nécessaire le rayon (2) isolé en direction de la zone d'évacuation (3) et, s'agissant du doigt positionné en regard des autres rayons (2) de la zone d'attente intermédiaire (11), pousser les rayons (2) en attente pour ne laisser pénétrer qu'un seul rayon (2) entre les deux doigts (12b).

Il ressort de ce qui précède que l'invention fournit bien un dispositif d'approvisionnement en rayons d'un pistolet qui permet de fonctionner en continu, peu importe les incidents de prélèvement ou de convoyage des rayons afin d'assurer un chargement constant du pistolet et une productivité optimale.

## Revendications

1. Dispositif (1) d'approvisionnement en rayons (2) d'un pistolet d'éjection de rayons dans des orifices d'un moyeu d'une roue à rayons, le dispositif (1) comprend :
- une réserve (4) de rayons (2) dans laquelle sont destinés à être entreposés en faisceaux les rayons (2) à approvisionner ;
- des moyens de prélèvement et de convoyage (5) des rayons (2), un par un, depuis une entrée positionnée dans la réserve (4), et en direction d'une zone d'évacuation (3) en regard de laquelle un pistolet d'éjection est destiné à être positionné ;
***caractérisé* en ce qu'**il comprend une zone d'attente intermédiaire (11) définissant un plan pour recevoir les rayons (2) positionnés côte à côte et à plat, dans laquelle les rayons (2) sont déposés un par un, située entre une sortie des moyens de prélèvement et de convoyage (5) et la zone d'évacuation (3), la zone d'attente intermédiaire (11) étant équipée de moyens (12) permettant de faire tomber un par un les rayons (2) dans la zone d'évacuation (3) pour approvisionner un pistolet.

2. Dispositif (1) selon la revendication 1, ***caractérisé* en ce que** les moyens (12) permettant de faire tomber un par un les rayons (2) dans la zone d'évacuation (3) se présentent sous la forme d'une inclinaison de la zone d'attente intermédiaire (11) en direction de la zone d'évacuation (3), ainsi que de moyens d'isolement (12a) d'un rayon (2).

3. Dispositif (1) selon la revendication 1, ***caractérisé* en ce que** les moyens d'isolement (12a) d'un rayon (2) se présentent sous la forme de deux doigts (12b) traversant un plan défini par la zone d'attente intermédiaire (11), pour isoler un rayon (2) entre les deux doigts (12b), les doigts (12b) sont escamotables indépendamment l'un de l'autre pour, d'une part, laisser pénétrer un rayon (2) entre les deux doigts (12b) et, d'autre part, laisser s'échapper ledit rayon (2) dans la zone d'évacuation (3).

4. Dispositif (1) selon la revendication 1, ***caractérisé* en ce que** la zone d'attente intermédiaire (11) présente des dimensions adaptées pour recevoir au moins neuf rayons (2).

5. Dispositif (1) selon la revendication 1, ***caractérisé* en ce qu'**il comprend un guide (6) réglable en largeur positionné de part et d'autre de la réserve (4) et des moyens de prélèvement et de convoyage (5).

6. Dispositif (1) selon la revendication 1, ***caractérisé* en ce qu'**il comprend des moyens de détection (8) de la présence de rayons (2) dans la zone d'attente intermédiaire (11) et/ou à l'entrée et/ou à la sortie des moyens de prélèvement et de convoyage (5).

7. Dispositif (1) selon la revendication 1, ***caractérisé* en ce que** la réserve (4) se présente sous la forme d'un plateau allongé dans une direction orthogonale aux rayons (2).

8. Dispositif (1) selon la revendication 1, ***caractérisé* en ce que** les moyens de prélèvement et de convoyage (5) des rayons (2) sont sous la forme d'une courroie (5a) crantée sur sa face externe, les rayons (2) étant destinés à se positionner entre deux crans de la courroie (5a).

9. Dispositif (1) selon la revendication 1, ***caractérisé* en ce qu'**il comprend un poussoir (7) positionné au niveau de l'entrée des moyens de prélèvement et de convoyage (5) pour pousser par le dessous les rayons (2).

## Patentansprüche

1. Zuführvorrichtung (1) zum Bereitstellen von Speichen (2) für eine Speichen-Ejektionspistole zum Einsetzen in Öffnungen einer Speichennabe eines Rades, wobei die Vorrichtung (1) umfasst:
- einen Vorratsbehälter (4) für die Speichen (2), in dem die zuzuführenden Speichen (2) bündelweise gelagert werden sollen;
- Entnahme- und Fördermittel (5) zum Aufnehmen und Fördern der Speichen (2) einzeln von einem im Vorratsbehälter (4) angeordneten Einlass in Richtung eines Abgabebereichs (3), vor dem eine Ejektionspistole positioniert werden soll;
***dadurch gekennzeichnet,* dass** sie einen Zwischenwartebereich (11) umfasst, der eine Ebene zum Aufnehmen der nebeneinander und flach liegenden Speichen (2) definiert, in dem die Speichen (2) einzeln abgelegt werden, wobei dieser Zwischenwartebereich (11) zwischen einem Ausgang der Entnahme- und Fördermittel (5) und dem Abgabebereich (3) angeordnet ist, und wobei der Zwischenwartebereich (11) mit Mitteln (12) ausgestattet ist, die es erlauben, die Speichen (2) einzeln in den Abgabebereich (3) fallen zu lassen, um eine Pistole zu versorgen.

2. Vorrichtung (1) nach Anspruch 1, ***dadurch gekennzeichnet,* dass** die Mittel (12), die es erlauben, die Speichen (2) einzeln in den Abgabebereich (3) fallen zu lassen, als eine Neigung des Zwischenwartebereichs (11) in Richtung des Abgabebereichs (3) sowie als Mittel (12a) zur Vereinzelung einer Speiche (2) ausgebildet sind.

3. Vorrichtung (1) nach Anspruch 1, ***dadurch gekennzeichnet,* dass** die Mittel (12a) zur Vereinzelung einer Speiche (2) in Form von zwei Fingern (12b) ausgebildet sind, die eine durch den Zwischenwartebereich (11) definierte Ebene durchdringen, um eine Speiche (2) zwischen den beiden Fingern (12b) zu vereinzeln, wobei die Finger (12b) unabhängig voneinander einfahrbar sind, um einerseits das Eindringen einer Speiche (2) zwischen die beiden Finger (12b) zu ermöglichen und andererseits das Entweichen der genannten Speiche (2) in den Abgabebereich (3) zuzulassen.

4. Vorrichtung (1) nach Anspruch 1, ***dadurch gekennzeichnet,* dass** der Zwischenwartebereich (11) Abmessungen aufweist, die geeignet sind, mindestens neun Speichen (2) aufzunehmen.

5. Vorrichtung (1) nach Anspruch 1, ***dadurch gekennzeichnet,* dass** sie eine in der Breite verstellbare Führung (6) umfasst, die beidseitig des Vorratsbehälters (4) und der Entnahme- und Fördermittel (5) angeordnet ist.

6. Vorrichtung (1) nach Anspruch 1, ***dadurch gekennzeichnet,* dass** sie Detektionsmittel (8) zur Erkennung der Anwesenheit von Speichen (2) im Zwischenwartebereich (11) und/oder am Einlass und/oder am Auslass der Entnahme- und Fördermittel (5) umfasst.

7. Vorrichtung (1) nach Anspruch 1, ***dadurch gekennzeichnet,* dass** der Vorratsbehälter (4) in Form einer in einer zur Speichenlängsrichtung orthogonalen Richtung verlängerten Platte ausgebildet ist.

8. Vorrichtung (1) nach Anspruch 1, ***dadurch gekennzeichnet,* dass** die Entnahme- und Fördermittel (5) für die Speichen (2) in Form eines Riemens (5a) mit außenliegender Verzahnung ausgebildet sind, wobei die Speichen (2) zwischen zwei Zähnen des Riemens (5a) positioniert werden sollen.

9. Vorrichtung (1) nach Anspruch 1, ***dadurch gekennzeichnet,* dass** sie einen Schieber (7) umfasst, der am Einlass der Entnahme- und Fördermittel (5) angeordnet ist, um die Speichen (2) von unten her anzuschieben.

## Claims

1. Supply device (1) for supplying spokes (2) to a spoke-ejection gun for insertion into holes of a spoked-wheel hub, the device (1) comprising:
- a storage container (4) for the spokes (2), in which the spokes (2) to be supplied are intended to be stored in bundles;
- means (5) for picking up and conveying the spokes (2), one by one, from an inlet positioned in the storage container (4) toward an evacuation area (3) in front of which an ejection gun is intended to be positioned;
***characterised* in that** it comprises an intermediate waiting zone (11) defining a plane for receiving the spokes (2) positioned side-by-side and flat, in which the spokes (2) are deposited one by one, located between an outlet of the pick-up and conveying means (5) and the evacuation area (3), the intermediate waiting zone (11) being equipped with means (12) allowing the spokes (2) to fall one by one into the evacuation area (3) in order to supply a gun.

2. Device (1) according to claim 1, ***characterised* in that** the means (12) allowing the spokes (2) to fall one by one into the evacuation area (3) are in the form of an inclination of the intermediate waiting zone (11) toward the evacuation area (3), as well as means (12a) for isolating a spoke (2).

3. Device (1) according to claim 1, ***characterised* in that** the means (12a) for isolating a spoke (2) are in the form of two fingers (12b) passing through a plane defined by the intermediate waiting zone (11), to isolate a spoke (2) between the two fingers (12b), the fingers (12b) being retractable independently of one another in order, on the one hand, to allow a spoke (2) to enter between the two fingers (12b) and, on the other hand, to allow said spoke (2) to escape into the evacuation area (3).

4. Device (1) according to claim 1, ***characterised* in that** the intermediate waiting zone (11) has dimensions suitable for receiving at least nine spokes (2).

5. Device (1) according to claim 1, ***characterised* in that** it comprises a width-adjustable guide (6) positioned on either side of the storage container (4) and of the pick-up and conveying means (5).

6. Device (1) according to claim 1, ***characterised* in that** it comprises detection means (8) for detecting the presence of spokes (2) in the intermediate waiting zone (11) and/or at the inlet and/or at the outlet of the pick-up and conveying means (5).

7. Device (1) according to claim 1, ***characterised* in that** the storage container (4) is in the form of a tray elongated in a direction orthogonal to the spokes (2).

8. Device (1) according to claim 1, ***characterised* in that** the pick-up and conveying means (5) for the spokes (2) are in the form of a belt (5a) toothed on its outer face, the spokes (2) being intended to be positioned between two teeth of the belt (5a).

9. Device (1) according to claim 1, ***characterised* in that** it comprises a pusher (7) positioned at the inlet of the pick-up and conveying means (5) to push the spokes (2) from underneath.
